# EUROPEAN PATENT APPLICATION

(11) **EP 2 584 486 A2**
(43) Date of publication of application: **24.04.2013**
(21) Application number: 12180277.1
(22) Date of filing: 13.08.2012
(51) Int. Cl.: G06F 21/10

(54) **Meter access management system**

(30) Priority: 16.08.2011 US 201113210501
(71) Applicant: General Electric Company, Schenectady, NY 12345 (US)
(72) Inventor: McKeown, Jeremy James, Atlanta, GA 30339-8402 (US); Jhang, Hyoung, Atlanta, GA 30339-8402 (US); Sampson, David Frederick, Atlanta, GA 30339-8402 (US)
(74) Representative: Picker, Madeline Margaret

(57) **Abstract**

Aspects of the invention provide for managing access to utility meters (122, 124, 126, 128). In one embodiment, a system includes: a computing device (110) communicatively connected to a first utility meter (122) and a second utility meter (124), the computing device (110) adapted to manage access to the first utility meter (122) and the second utility meter (124) by performing actions comprising: receiving a program file (112) for updating at least one of the first utility meter (122) and the second utility meter (124), each utility meter (122, 124) including a meter table (130); comparing the program file (112) to the meter table (130) of the at least one of the first utility meter (122) and the second utility meter (124) to determine if the program file (112) includes authorized bit changes (234) to the meter table (130); and updating, in response to the comparing, the meter table (130) of the at least one of the first utility meter (122) and the second utility meter (124).

## Description

### BACKGROUND OF THE INVENTION

The subject matter disclosed herein relates generally to meter technology. More specifically, the present disclosure relates to a management system for managing access to utility meters.

When programming a utility meter through a conventional Advanced Meter Infrastructure (AMI) system, the AMI server stores data within a program file into the meter table of the utility meter. However, in order to do this, the AMI server must understand the composition of the program file and how to program the utility meter directly. Some of the data stored in the meter table is data that is required in order for the utility meter to function properly within the utility network (e.g., the meter identification number). Therefore, the functionality of conventional AMI servers limits enterprise access in programming utility meters, so as to protect the utility meters from faulty programming that would inadvertently change the required data. For example, if the program file inadvertently changed the meter identification number within the meter table, the utility meter would not be able to connect to the utility network, and a field technician would be required to manually restore the meter identification number within the meter table.

### BRIEF DESCRIPTION OF THE INVENTION

Aspects of the invention provide for managing access to utility meters. In one embodiment, aspects of the invention include a system comprising: a computing device communicatively connected to a first utility meter and a second utility meter, the computing device adapted to manage access to the first utility meter and the second utility meter by performing actions comprising: receiving a program file for updating at least one of the first utility meter and the second utility meter, each utility meter including a meter table; comparing the program file to the meter table of the at least one of the first utility meter and the second utility meter to determine if the program file includes authorized bit changes to the meter table; and updating, in response to the comparing, the meter table of the at least one of the first utility meter and the second utility meter.

A first aspect of the invention provides a system comprising: a computing device communicatively connected to a first utility meter and a second utility meter, the computing device adapted to manage access to the first utility meter and the second utility meter by performing actions comprising: receiving a program file for updating at least one of the first utility meter and the second utility meter, each utility meter including a meter table; comparing the program file to the meter table of the at least one of the first utility meter and the second utility meter to determine if the program file includes authorized bit changes to the meter table; and updating, in response to the comparing, the meter table of the at least one of the first utility meter and the second utility meter.

A second aspect of the invention provides a computer program comprising program code embodied in at least one computer-readable medium, which when executed by at least one computing device communicatively connected to a first utility meter and a second utility meter, performs the following: receives a program file for updating at least one of the first utility meter and the second utility meter, each utility meter including a meter table; compares the program file to the meter table of the at least one of the first utility meter and the second utility meter to determine if the program file includes authorized bit changes to the meter table; and updates, in response to the comparing, the meter table of the at least one of the first utility meter and the second utility meter.

A third aspect of the invention provides a system comprising: a network communicatively connected to a first utility meter and a second utility meter; and a computing device communicatively connected to the network, the computing device adapted to manage access to the first utility meter and the second utility meter by performing actions comprising: receiving a program file for updating at least one of the first utility meter and the second utility meter, each utility meter including a meter table; comparing the program file to the meter table of the at least one of the first utility meter and the second utility meter to determine if the program file includes authorized bit changes to the meter table; and updating, in response to the comparing, the meter table of the at least one of the first utility meter and the second utility meter.

### BRIEF DESCRIPTION OF THE DRAWINGS

These and other features of this invention will be more readily understood from the following detailed description of the various aspects of the invention taken in conjunction with the accompanying drawings that depict various embodiments of the invention, in which:
FIG. 1 shows a schematic illustration of an environment including a management system in accordance with an embodiment of the invention.
Fig. 2 shows an illustrative method flow diagram according to embodiments of the invention.
FIG. 3 shows schematic illustration of an environment including a management system in accordance with an embodiment of the invention.

It is noted that the drawings of the invention are not to scale. The drawings are intended to depict only typical aspects of the invention, and therefore should not be considered as limiting the scope of the invention. In the drawings, like numbering represents like elements between the drawings.

### DETAILED DESCRIPTION OF EMBODIMENTS OF THE INVENTION

The subject matter disclosed herein relates generally to meter technology. More specifically, the present disclosure relates to a management system for managing access to utility meters.

As mentioned above, when programming a utility meter through a conventional Advanced Meter Infrastructure (AMI) system, the AMI server stores data within a program file into the meter table of the utility meter. However, in order to do this, the AMI server must understand the composition of the program file and how to program the utility meter directly. Some of the data stored in the meter table is data that is required in order for the utility meter to function properly within the utility network

(e.g., the meter identification number). Therefore, the functionality of conventional AMI servers limits enterprise access in programming utility meters, so as to protect the utility meters from faulty programming that would inadvertently change the required data. For example, if the program file inadvertently changed the meter identification number within the meter table, the utility meter would not be able to connect to the utility network, and a field technician would be required to manually restore the meter identification number within the meter table. Therefore, important updates, such as a firmware updates, cannot be remotely programmed into utility meters through the AMI server in a conventional AMI system.

As indicated above, aspects of the invention provide for systems and devices configured to manage access to utility meters. A computing device is configured such that it may connect to the utility meters connected to a utility network. The computing device may, via the connection(s) between the computing device and the utility meters, allow for a management system, within the computing device, to manage access to the utility meters. As a result of utilizing aspects of the invention, as discussed later herein, the utility meters may be properly programmed and updated, through the AMI server, without inadvertently changing required data within the meter tables.

In the art of metered services and systems, utility meters (including, e.g., electrical meters, smart meters, power meters, gas meters, etc.) are used to track and record service consumption. These utility meters need to be programmed and/or updated in order to function properly. In contrast to the conventional system, embodiments of the current invention provide for a system which manages the access to programming the utility meters, so that the utility meters can be properly programmed and/or updated without error. The system includes a computing device which is communicatively connected to a plurality of utility meters. The computing device is adapted to manage access to each of the utility meters when a program file is received for updating the meter table of the utility meters. Once a program file is received, the computing device compares the program file to the meter table of each of the utility meters to determine if the program file includes authorized bit changes to the meter table. If the bit changes to the meter table are unauthorized (i.e., the bit changes in the program file change data in the meter table that is required in order for the utility meter to function properly within the utility network), the program file will be rejected. If the bit changes to the meter table are authorized, the meter table is updated according to the program file.

As will be appreciated by one skilled in the art, the management system described herein may be embodied as a system(s), method(s) or computer program product(s), e.g., as part of a utility network system, utility network, utility meter, etc. Accordingly, embodiments of the present invention may take the form of an entirely hardware embodiment, an entirely software embodiment (including firmware, resident software, micro-code, etc.) or an embodiment combining software and hardware aspects that may all generally be referred to herein as a "circuit," "module," "network" or "system." Furthermore, the present invention may take the form of a computer program product embodied in any tangible medium of expression having computer-usable program code embodied in the medium.

Any combination of one or more computer usable or computer readable medium(s) may be utilized. The computer-useable or computer-readable medium may be, for example but not limited to, an electronic, magnetic, optical, electromagnetic, infrared, or semiconductor system, apparatus, or device. More specific examples (a non-exhaustive list) of the computer-readable medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a transmission media such as those supporting the Internet or an intranet, or a magnetic storage device. Note that the computer-usable or computer-readable medium could even be paper or another suitable medium upon which the program is printed, as the program can be electronically captured, via, for instance, optical scanning of the paper or other medium, then compiled, interpreted, or otherwise processed in a suitable manner, if necessary, and then stored in a computer memory. In the context of this document, a computer-usable or computer-readable medium may be any medium that can contain, store, communicate, or transport the program for use by or in connection with the instruction execution system, apparatus, or device. The computer-usable medium may include a propagated data signal with the computer-usable program code embodied therewith, either in baseband or as part of a carrier wave. The computer usable program code may be transmitted using any appropriate medium, including but not limited to wireless, wireline, optical fiber cable, RF, etc.

Computer program code for carrying out operations of the present invention may be written in any combination of one or more programming languages, including an object oriented programming language such as Java, Smalltalk, C++ or the like and conventional procedural programming languages, such as the "C" programming language or similar programming languages. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

These computer program instructions may also be stored in a computer-readable medium that can direct a computer or other programmable data processing apparatus to function in a particular manner, such that the instructions stored in the computer-readable medium produce an article of manufacture including instruction means which implement the function/act specified in the block diagram block or blocks.

The computer program instructions may also be loaded onto a computer or other programmable data processing apparatus to cause a series of operational steps to be performed on the computer or other programmable apparatus to produce a computer implemented process such that the instructions which execute on the computer or other programmable apparatus provide processes for implementing the functions/acts specified in the flowchart and/or block diagram block or blocks.

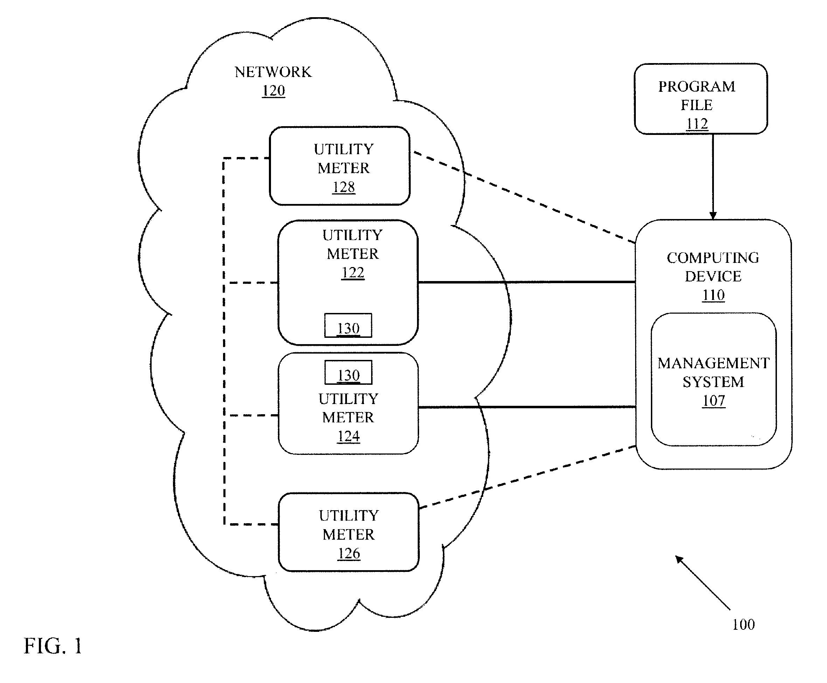

Turning to the figures, embodiments of an access management system are shown, where the access management system manages access to program and/or update a plurality of utility meters. Specifically, referring now to FIG. 1, a schematic illustration of an embodiment of an access management system 100 is shown. Access management system 100 may include a management system 107 disposed on a computing device 110, which is communicatively connected to a utility meter 122 and a utility meter 124. Utility meter 122 and utility meter 124 may comprise an electrical meter, a water meter, a gas meter, a smart meter or any other form of utility meter as is known in the art. Utility meter 122 and utility meter 124 may or may not be interconnected via a coupling, network, communication channel etc. For example, utility meter 122 and utility meter 124 may be connected through a network 120. Network 120 may include any of an Advanced Metering Infrastructure (AMI), a utility network, a Neighborhood Area Network (NAN), a Local Area Network (LAN) or any other form of network as is known in the art.

In any event, computing device 110 can comprise any general purpose computing article of manufacture capable of executing computer program code installed by a user (e.g., a personal computer, server, handheld device, etc.). However, it is understood that computing device 110, utility meter 126, utility meter 128, utility meter 122 and utility meter 124 are only representative of various possible equivalent computing devices that may perform the various process steps of the disclosure. To this extent, in other embodiments, computing device 110 can comprise any specific purpose computing article of manufacture comprising hardware and/or computer program code for performing specific functions, any computing article of manufacture that comprises a combination of specific purpose and general purpose hardware/software, or the like. In each case, the program code and hardware can be created using standard programming and engineering techniques, respectively.

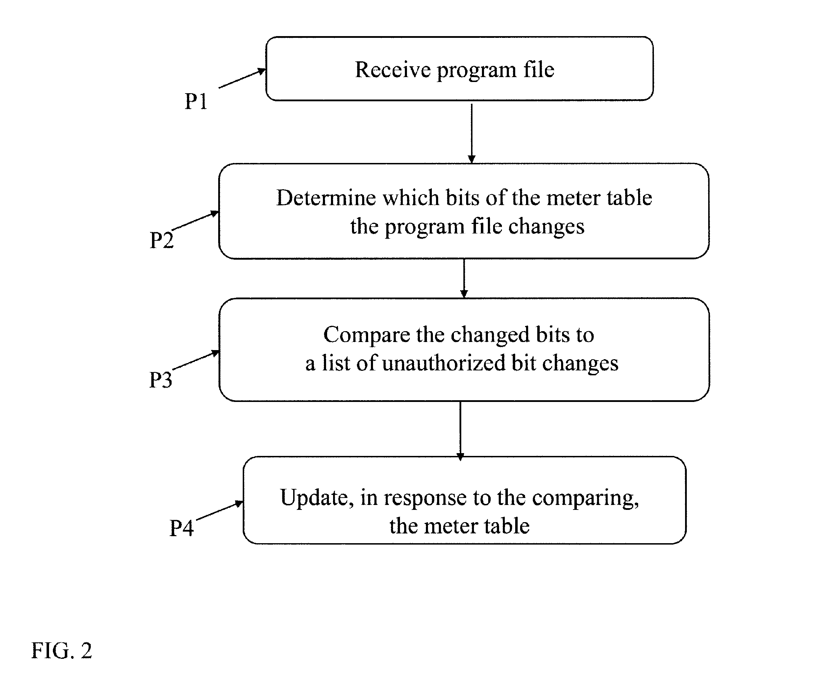

Turning to Fig. 2, an illustrative method flow diagram of the access management system 100 in FIG. 1 is shown according to embodiments of the invention. In process P1, the management system 107 receives the program file 112. The program file 112 includes a plurality of bits for programming and/or updating the plurality of bits of the meter table 130 of at least one of the first utility meter 122 or the second utility meter 124. In an alternative embodiment, the program file 112 includes a plurality of bits for updating the meter table 130 of all the utility meters 122, 124, 126, 128. In any event, the plurality of bits of the program file 112 can indicate which utility meter to program and/or update. For example purposes only, the remaining portions of the method flow will be described as if program file 112 indicated that the meter table 130 of the first utility meter 122 would be programmed and/or updated with program file 112. However, it is understood that this is only for exemplary purposes, and that any number of utility meters may be indicated by the program file 112.

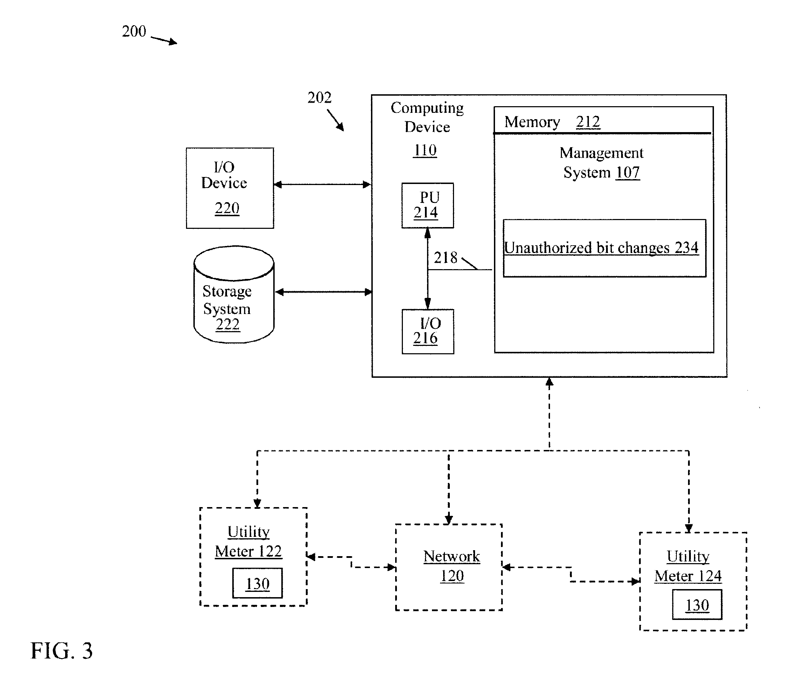

Once the program file 112 is received by the management system 107, the management system 107, at processes P2 and P3, can compare the program file 112 to the meter table 130 of the first utility meter 122 to determine if the program file 112 includes authorized bit changes to the meter table 130. Specifically, at process P2, the management system 107 determines which bits of the plurality of bits of the meter table 130 of the first utility meter 122 the program file 112 includes changes. Then, at process P3, these changed bits are compared to a list of unauthorized bit changes 234 (FIG. 3). The list of unauthorized bit changes 234 (FIG. 3) include the bits within meter table 130 that control a value that is required for the first utility meter 122 to be properly connected and function within the utility network 120. For example, the bits may affect the connectivity between a meter (for example, first utility meter 122) and a network card (not shown) that connects the meter to the network 120. Alternatively, the bits may be required to be static (i.e., not change) once the meter has begun operating. Therefore, these bits 234 (FIG. 3) cannot be changed by the program file 112.

Although only one meter table 130 is shown within each of the utility meters 122, 124, it is understood that each utility meter 122, 124 may include any number of meter tables 130. For example, the meter table 130 may be a "Generic Configuration" meter table, a "Manufacturer Identification" meter table, a "Device Nameplate" meter table, or an "EndDevice Mode & Status" meter table. This listing is meant for exemplary purposes only, and is in no way limiting the scope of the invention. Turning back to FIG. 2, at process P4, if the program file 112 does not include any unauthorized bit changes 234 (FIG. 3), the meter table 130 of the first utility meter 122 is updated and/or programmed according to the program file 112. Although not shown in FIG. 2, if the program file 112 includes any unauthorized bit changes 234 (FIG. 3), the program file will be rejected.

The data flow diagram and block diagrams in the Figures illustrate the architecture, functionality, and operation of possible implementations of systems, methods and computer program products according to various embodiments of the present invention. In this regard, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the Figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts, or combinations of special purpose hardware and computer instructions.

Turning to Fig. 3, an illustrative environment 200 including a management system 107 is shown according to embodiments of the invention. Environment 200 includes a computer infrastructure 202 that can perform the various processes described herein. In particular, computer infrastructure 202 is shown including computing device 110 which includes management system 107, which enables computing device 110 to manage access to the first utility meter 122 and the second utility meter 124 by performing the process steps of the disclosure.

As previously mentioned and discussed further below, management system 107 has the technical effect of enabling computing device 110 to perform, among other things, the access management functions described herein. It is understood that some of the various components shown in FIG. 3 can be implemented independently, combined, and/or stored in memory for one or more separate computing devices that are included in computing device 110. Further, it is understood that some of the components and/or functionality may not be implemented, or additional schemas and/or functionality may be included as part of access management system 100.

Computing device 110 is shown including a memory 212, a processor unit (PU) 214, an input/output (I/O) interface 216, and a bus 218. Further, computing device 110 is shown in communication with an external I/O device/resource 220 and a storage system 222. As is known in the art, in general, processor 214 executes computer program code, such as management system 107, that is stored in memory 212 and/or storage system 222. While executing computer program code, processor 214 can read and/or write data, such as unauthorized bit changes 234, to/from memory 212, storage system 222, and/or I/O interface 216. Bus 218 provides a communications link between each of the components in computing device 110. I/O device 220 can comprise any device that enables a user to interact with computing device 110 or any device that enables computing device 110 to communicate with one or more other computing devices. Input/output devices (including but not limited to keyboards, displays, pointing devices, etc.) can be coupled to the system either directly or through intervening I/O controllers.

In some embodiments, as shown in FIG. 3, environment 200 may optionally include the first utility meter 122, the second utility meter 124 and the utility network 120 communicatively connected to management system 107 through computing device 110 (e.g., via wireless or hard-wired means). In some embodiments, computing device 110 and/or management system 107 may be disposed upon or within the first utility meter 122 and/or the second utility meter 124.

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

This written description uses examples to disclose the invention, including the best mode, and also to enable any person skilled in the art to practice the invention, including making and using any devices or systems and performing any incorporated methods. The patentable scope of the invention is defmed by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

## Claims

1. A system (100) comprising:
a computing device (110) communicatively connected to a first utility meter (122) and a second utility meter (124), the computing device (110) adapted to manage access to the first utility meter (122) and the second utility meter (124) by performing actions comprising:
receiving a program file (112) for updating at least one of the first utility meter (122) and the second utility meter (124), each utility meter (122, 124) including a meter table (130);
comparing the program file (112) to the meter table (130) of the at least one of the first utility meter (122) and the second utility meter (124) to determine if the program file (112) includes authorized bit changes (234) to the meter table (130); and
updating, in response to the comparing, the meter table (130) of the at least one of the first utility meter (122) and the second utility meter (124).

2. The system (100) of claim 1, wherein the program file (112) and each meter table (130) include a plurality of bits.

3. The system (100) of claim 2, wherein the plurality of bits of the program file (112) includes changes to the plurality of bits of the meter table (130).

4. The system (100) of claim 3, wherein the comparing of the program file (112) to the meter table (130) of the at least one of the first utility meter (122) and the second utility meter (124) further includes:
determining which bits of the plurality of bits of the meter table (130) that the program file (112) includes changes to; and
comparing the changed bits to a list of unauthorized bit changes (234).

5. The system (100) of claim 4, further comprising rejecting the program file (112), in response to the program file (112) including unauthorized bit changes (234).

6. The system (100) of claim 3, 4 or 5, wherein the list of unauthorized bit changes (234) includes bits within each meter table (130) that control a value required for the first utility meter (122, 124, 126, 128) and the second utility meter (122, 124, 126, 128) to connect to a utility network.

7. A computer program comprising program code embodied in at least one computer-readable medium, which when executed by at least one computing device (110) communicatively connected to a first utility meter (122) and a second utility meter (124), performs the following:
receives a program file (112) for updating at least one of the first utility meter (122) and the second utility meter (124), each utility meter (122, 124) including a meter table (130);
compares the program file (112) to the meter table (130) of the at least one of the first utility meter (122) and the second utility meter (124) to determine if the program file (112) includes authorized bit changes (234) to the meter table (130); and
updates, in response to the comparing, the meter table (130) of the at least one of the first utility meter (122) and the second utility meter (124).

8. The computer program of claim 7, wherein the program file (112) and each meter table (130) include a plurality of bits.

9. The computer program of claim 8, wherein the plurality of bits of the program file (112) includes changes to the plurality of bits of the meter table (130).

10. The computer program of claim 9, wherein the comparing of the program file (112) to the meter table (130) of the at least one of the first utility meter (122) and the second utility meter (124) further includes:
determining which bits of the plurality of bits of the meter table (130) that the program file includes changes to; and
comparing the changed bits to a list of unauthorized bit changes.

11. The computer program of claim 10, further comprising rejecting the program file, in response to the program file including unauthorized bit changes.

12. The computer program of claim 9, 10 or 11, wherein the list of unauthorized bit changes includes bits within each meter table (130) that control a value required for the first utility meter (122) and the second utility meter (124) to connect to a utility network.

13. A system (100) comprising:
a network (120) communicatively connected to a first utility meter (122) and a second utility meter (124); and
a system of any one of claims 1 to 6, wherein the computing device (110) is communicatively connected to the network (120).

14. The system of claim 13, wherein the computing device (100) is communicatively connected to a plurality of utility meters via the network (120).
